# EUROPÄISCHE PATENTANMELDUNG

(11) **EP 3 450 507 A1**
(43) Veröffentlichungstag der Anmeldung: **06.03.2019**
(21) Anmeldenummer: 17188439.8
(22) Anmeldetag: 29.08.2017
(51) Int. Cl.: C09D 5/00

(54) **ZUSAMMENSETZUNG**

(71) Anmelder: Kirchmayer, Johann, 8020 Graz (AT); Höller, Anita, 8073 Feldkirchen bei Graz (AT)
(72) Erfinder: Baumgärtner, Harald, 5600 St. Johann im Pongau (AT)

(57) **Zusammenfassung**

Die vorliegende Erfindung betrifft eine Zusammensetzung zum Auftragen auf einer Oberfläche, zum Beispiel von Booten oder Fahrzeugen, zur Ausbildung einer umweltverträglichen Antifouling-Beschichtung, wobei die Zusammensetzung Harz, Titandioxid, Zellstofffaser, Biozid, Milchfett und organisches Lösungsmittel umfasst. Des Weiteren betrifft die vorliegende Erfindung ein Verfahren zur Herstellung einer solchen Zusammensetzung, deren Verwendung, ein Verfahren zur Beschichtung eines Gegenstands und eine Beschichtung.

## Beschreibung

### GEBIET DER ERFINDUNG

Die vorliegende Erfindung betrifft eine Zusammensetzung zum Auftragen auf einer Oberfläche, zum Beispiel von Booten oder Fahrzeugen, zur Ausbildung einer umweltverträglichen Antifouling-Beschichtung bzw. eines umweltverträglichen Antifouling-Überzugs. Des Weiteren betrifft die vorliegende Erfindung ein Verfahren zur Herstellung einer solchen Zusammensetzung, deren Verwendung, ein Verfahren zur Beschichtung eines Gegenstands und eine Beschichtung.

### HINTERGRUND

Durch Fouling, d.h. eine unerwünschte Ansiedlung von Organismen an technischen Oberflächen, die sich überwiegend in Wasser befinden, wie Schiffsrümpfe oder wasserbauliche Anlagen aus Holz, Metall und Kunststoff, entstehen große wirtschaftliche Schäden, zum Beispiel bei Schiffen durch Gewichtszunahme und erhöhten Strömungswiderstand mit entsprechend höheren Treibstoffkosten.

Es besteht daher ein großer Bedarf im Bereich Metall und Kunststoff, Gummi und Holz, für einen durch Meerwasser, Algen und Muscheln, oder einer Solelösung zu schützenden Bereich. Dazu zählen beispielsweise Bootsteile aus Kunststoff und Metall, Gummi und Holz, die einer Versprühung bzw. durch Betrieb im Salzwasser ausgesetzt sind.

Aus dem Stand der Technik sind verschiedene Antifouling-Beschichtungen bekannt, die aber alle den Nachteil haben, Giftstoffe durch den Betrieb freizusetzen und somit ökologisch bedenklich sind.

Bei den bekannten Zusammensetzungen des derzeitigen Standes der Technik ist somit insbesondere nachteilig, dass diese Antifouling Anstriche durch Abrieb Giftstoffe abgeben und eine Schädigung der Umwelt verursachen.

Es besteht daher ein Bedarf an einer Verbesserung von Beschichtungen, insbesondere zum Schutz vor Fouling, ohne den oben beschriebenen Einschränkungen bzw. Nachteilen zu unterliegen.

### AUFGABEN DER ERFINDUNG

Eine Aufgabe der vorliegenden Erfindung ist es daher, eine Zusammensetzung bereitzustellen, die auf einfache Weise auf einen Gegenstand (wie zum Beispiel ein Boot oder Fahrzeug) oder einer Fläche aufgetragen werden kann und dabei bei allen Temperaturen eine Beschichtung ergibt, die vor Fouling schützt (Antifouling-Beschichtung), aber auch für Rost- und Salzschutz sorgt, umweltverträglich ist, auch bei Abrieb der Beschichtung, sowie leicht zu reinigen ist.

Des Weiteren ist angestrebt, ein einfaches und effizientes Verfahren zum Herstellen einer derartigen Zusammensetzung bereitzustellen sowie ein einfaches und effizientes Beschichtungsverfahren bereitzustellen.

Darüber hinaus ist es ein Ziel der vorliegenden Erfindung, ein Beschichtung bereitzustellen, die einen Schutz vor Fouling, Rost und/oder Salzen bietet und auch bei Abrieb weder die Umwelt noch das Wasser verunreinigt sowie eine einfache und umweltschonende Reinigung der damit geschützten Flächen ermöglicht, zum Beispiel mittels Dampfstrahler.

### ZUSAMMENFASSUNG DER ERFINDUNG

Die Erfinder der vorliegenden Erfindung haben umfangreiche Studien zur Lösung dieser Aufgaben durchgeführt und insbesondere herausgefunden, dass mit einer Zusammensetzung, die eine Mischung oder Kombination aus Harz, Titandioxid, Zellstofffaser, Biozid, Milchfett und organisches Lösungsmittel enthält, die erfindungsgemäß gewünschten Eigenschaften erzielt werden können.

Die vorliegende Erfindung betrifft dementsprechend eine Zusammensetzung zum Auftragen auf einer Oberfläche (zum Beispiel aus Metall, Kunststoff, Gummi, Stoff oder Holz, zum Beispiel von einem Booten oder einem Fahrzeug) zur Ausbildung einer Beschichtung bzw. eines Überzugs, wobei die Zusammensetzung Harz, Titandioxid, Zellstofffaser, Biozid, Milchfett und organisches Lösungsmittel umfasst.

Des Weiteren betrifft die vorliegende Erfindung ein Verfahren zur Herstellung einer Zusammensetzung zum Auftragen auf einer Oberfläche, insbesondere einer erfindungsgemäßen Zusammensetzung, umfassend folgende Schritte:
zumindest teilweises Lösen eines Harzes in einem organischen Lösungsmittel, insbesondere Ethanol,
zumindest teilweises Lösen von Titandioxid in einer Säure, insbesondere Schwefelsäure,
optional Lösen von mindestens einem Additiv, ausgewählt aus der Gruppe, bestehend aus Härter und Verlaufmittel, in einem organischen Lösungsmittel, insbesondere Ethanol,
Bereitstellen von Zellstofffaser, Biozid und Milchfett in Wasser,
Mischen der hergestellten und bereitgestellten Lösungen bzw.
Suspensionen (im Folgenden auch als (erfindungsgemäßes) Herstellungsverfahren bezeichnet).

Die erfindungsgemäße Zusammensetzung kann insbesondere zur Ausbildung einer Beschichtung eingesetzt werden, die den damit beschichteten Gegenstand vor Umwelteinflüssen, wie Fouling aber auch Korrosion und Salzen, schützen kann.

Dementsprechend betrifft die vorliegende Erfindung auch die Verwendung der erfindungsgemäßen Zusammensetzung zur Herstellung einer Beschichtung, insbesondere einer Antifouling-Beschichtung, auf einem Gegenstand durch Aufbringen bzw. Auftragen der Zusammensetzung.

Weiterhin betrifft die vorliegende Erfindung ein Verfahren zur Beschichtung eines Gegenstands, das einen Schritt des Auftragens einer erfindungsgemäßen Zusammensetzung auf einer Oberfläche des Gegenstands umfasst (im Folgenden auch als (erfindungsgemäßes) Beschichtungsverfahren bezeichnet).

Darüber hinaus betrifft die vorliegende Erfindung eine (harzhaltige) Beschichtung, gebildet aus einer erfindungsgemäßen Zusammensetzung bzw. erhältlich nach einem erfindungsgemäßen Beschichtungsverfahren.

Ein mit der Erfindung erzielter Vorteil ist insbesondere darin zu sehen, dass eine Zusammensetzung bereitgestellt wird, die auf einfache Weise bei Temperaturen ab 0°C auf Oberflächen aufgetragen werden kann, beispielsweise durch Streichen, Rakeln, Rollen, Spritzen, oder mit der Hand Auftragen, und auf Grund der vorgesehenen Mischung einen schützenden Film bildet. Die Schichtstärke ist nicht für die Funktion aussagekräftig. Vielmehr kann die Schichtstärke je nach gewünschter Haltbarkeit im Wasser aufgetragen werden. Die erfindungsmäßige Zusammensetzung zeichnet sich durch eine biologische Abbaubarkeit und Umweltverträglichkeit aus. Nach dem Sommerbetrieb eines Bootes kann die Schicht bei Servicearbeiten mit einem Hochdruckreiniger entfernt und neu aufgetragen werden. Beschädigungen können auch im Wasser ausgebessert werden, da das Material nicht wasserlöslich ist. Die Beschichtung der erfindungsgemäßen Zusammensetzung zeichnet sich durch eine leichte Auftragbarkeit und Langlebigkeit aus, wie bereits durch interne Testarbeiten über 2 Jahre bewiesen wurde.

Weitere Aufgaben und Vorteile von Ausführungsformen der vorliegenden Erfindung werden an Hand der folgenden detaillierten Beschreibung ersichtlich.

### DETAILLIERTE BESCHREIBUNG DER ERFINDUNG

Im Folgenden werden nähere Details der vorliegenden Erfindung und weitere Ausführungsformen davon beschrieben. Die vorliegende Erfindung ist jedoch nicht auf die folgende detaillierte Beschreibung beschränkt, sondern sie dient lediglich der Veranschaulichung der erfindungsgemäßen Lehren.

Es sei darauf hingewiesen, dass Merkmale, die im Zusammenhang mit einer beispielhaften Ausführungsform oder einem beispielhaftem Gegenstand beschrieben werden, mit jeder anderen beispielhaften Ausführungsform oder mit jedem anderen beispielhaften Gegenstand kombiniert werden können. Insbesondere können Merkmale, die im Zusammenhang mit einer beispielhaften Ausführungsform der erfindungsgemäßen Zusammensetzung beschrieben werden, mit jeder anderen beispielhaften Ausführungsform der erfindungsgemäßen Zusammensetzung sowie mit jeder beispielhaften Ausführungsform der erfindungsgemäßen Verfahren, Verwendungen und Beschichtungen kombiniert werden und umgekehrt, sofern nicht ausdrücklich etwas anderes vermerkt ist.

Wenn ein Begriff mit einem unbestimmten oder bestimmten Artikel, wie zum Beispiel "ein", "eine", "eines", "der", "die" und "das", im Singular bezeichnet wird, schließt dies auch den Begriff im Plural mit ein und umgekehrt, sofern der Kontext nicht eindeutig anderes festlegt. Der Ausdruck "umfassen", wie er hier verwendet wird, schließt nicht nur die Bedeutung von "enthalten" oder "beinhalten" ein, sondern kann auch "bestehen aus" und "im Wesentlichen bestehen aus" bedeuten.

Die Zusammensetzung zum Auftragen auf einer Oberfläche zur Ausbildung einer Beschichtung bzw. eines Überzugs umfasst mindestens ein Harz, mindestens ein Titandioxid, mindestens eine Zellstofffaser (Cellulosefaser), mindestens ein Biozid (biozides Mittel), mindestens ein Milchfett und mindestens ein organisches Lösungsmittel. Weitere Bestandteile, wie insbesondere ein Enzym und/oder mindestens ein Additiv, ausgewählt aus der Gruppe, bestehend aus Härter und Verlaufmittel, können enthalten sein. Die Zusammensetzung kann eine flüssige, insbesondere zähflüssige, Zusammensetzung sein.

In einer beispielhaften (bevorzugten) Ausführungsform ist die Zusammensetzung eine (klare) Lösung, d.h. sämtliche Bestandteile oder Komponenten der Zusammensetzung lösen sich im Wesentlichen vollständig in dem verwendeten Lösungsmittel.

In einer alternativen Ausführungsform ist die Zusammensetzung eine Dispersion, insbesondere eine Suspension, d.h. eine oder mehrere Bestandteile oder Komponenten der Zusammensetzung lösen sich nicht oder nur teilweise in dem verwendeten Lösungsmittel. Die Zusammensetzung kann somit (feste) Partikel von einer oder mehreren Komponenten enthalten.

In einer beispielhaften Ausführungsform enthält die Zusammensetzung maximal 20 Gew.-% Harz, insbesondere maximal 15 Gew.-% Harz, insbesondere maximal 12 Gew.-% Harz, insbesondere maximal 10 Gew.-% Harz. Die Zusammensetzung kann insbesondere mindestens 2 Gew.-% Harz, insbesondere mindestens 4 Gew.-% Harz, insbesondere mindestens 5 Gew.-% Harz, insbesondere mindestens 6 Gew.-% Harz, umfassen. In einer beispielhaften Ausführungsform enthält die Zusammensetzung etwa 8 Gew.-% Harz.

Das Harz kann insbesondere ein natürliches Harz umfassen. In einer beispielhaften Ausführungsform kann das Harz aus der Gruppe, bestehend aus Harz aus Ahorn (Ahornharz), Harz aus Birke (Birkenharz) und Mischungen davon, ausgewählt sein. Zum Beispiel hat sich Birkenharz als besonders geeignet erwiesen.

In einer beispielhaften Ausführungsform enthält die Zusammensetzung mindestens 1 Gew.-% Titandioxid, insbesondere mindestens 2 Gew.-% Titandioxid, insbesondere mindestens 3 Gew.-% Titandioxid, und maximal 10 Gew.-% Titandioxid, insbesondere maximal 7,5 Gew.-% Titandioxid, insbesondere maximal 5 Gew.-% Titandioxid. In einer beispielhaften Ausführungsform enthält die Zusammensetzung etwa 4 Gew.-% Titandioxid.

Das Titandioxid ist nicht besonders beschränkt. Rutil, Anatas oder auch Brookit können grundsätzlich eingesetzt werden. In einer beispielhaften Ausführungsform ist das Titandioxid in einer Säure (zumindest teilweise) gelöst, wie zum Beispiel in Schwefelsäure.

In einer beispielhaften Ausführungsform enthält die Zusammensetzung mindestens 1 Gew.-% Zellstofffaser, insbesondere mindestens 2 Gew.-% Zellstofffaser, insbesondere mindestens 3 Gew.-% Zellstofffaser, und maximal 10 Gew.-% Zellstofffaser, insbesondere maximal 7,5 Gew.-% Zellstofffaser, insbesondere maximal 5 Gew.-% Zellstofffaser. In einer beispielhaften Ausführungsform enthält die Zusammensetzung etwa 4 Gew.-% Zellstofffaser.

Unter einer "Zehstofffaser" im Sinne der vorliegenden Anmeldung wird im Allgemeinen eine Faser aus Cellulose verstanden, die beispielsweise eine Faserlänge von 60 bis 120 µm hat und je nach Verwendung beigefügt wird. Geeignete Zellstofffasern sind beispielsweise unter der Marke TECHNOCEL^{®} erhältlich.

In einer beispielhaften Ausführungsform enthält die Zusammensetzung mindestens 0,5 Gew.-% Biozid, insbesondere mindestens 1 Gew.-% Biozid, insbesondere mindestens 1,5 Gew.-% Biozid, und maximal 5 Gew.-% Biozid, insbesondere maximal 4 Gew.-% Biozid, insbesondere maximal 3 Gew.-% Biozid. In einer beispielhaften Ausführungsform enthält die Zusammensetzung etwa 2 Gew.-% Biozid.

Unter einem "Biozid" im Sinne der vorliegenden Anmeldung wird im Allgemeinen eine Substanz (bzw. eine Mischung von Substanzen) verstanden, die Organsimen, wie zum Beispiel Mikroorganismen, Pflanzen oder Tiere, abtöten kann oder zumindest deren Wachstum kontrollieren kann. Insbesondere wird im Sinne der vorliegenden Anmeldung unter einem "Biozid" eine Substanz (bzw. eine Mischung von Substanzen) verstanden, die Fouling verursachende Organsimen abtöten kann oder zumindest deren Wachstum kontrollieren kann. Geeignete Biozide sind beispielsweise unter der Marke ACTICIDE^{®} erhältlich.

In einer beispielhaften Ausführungsform ist das Biozid ausgewählt aus der Gruppe, bestehend aus Isothiazolinonen, Oxazolidinen, Carbamate, quarternären Ammoniumverbindungen und Mischungen davon.

In einer beispielhaften Ausführungsform ist das Biozid ausgewählt aus der Gruppe, bestehend aus Methylisothiazolinon (z.B. 2-Methyl-4-isothiazolin-3-on, MIT), Chlormethylisothiazolinon (z.B. 5-Chlor-2-methyl-4isothiazolin-3-on, CMIT), Benzisothiazolinon (z.B. 1,2-Benzisathiazolin-3-on, BIT), Octylisothiazolinon (z.B. 2-Octylisothiazolin-3-on, OIT), Dichloroctylisothiazolinon (z.B. 4,5-Dichlor-2-octyl-4-isothiazolin-3-on, DCOIT), Butylbenzisothiazolinon (z.B. 2-Butyl-1,2-benzisathiazolin-3-on, BBIT), bis-(5,5-Dimethyl-1,3-oxazolidin-3-yl)methan, Benzimidazolcarbamat, Iodpropinylbutylcarbamat (z.B. 3-Iod-2-propinylbutylcarbamat, IPBC, Iodocarb), Benzalkoniumchlorid, Didecyldimethylammoniumchlorid (z.B. Di-n-decyldimethylammoniumchlorid, DDAC).

Insbesondere kann das Biozid Dichloroctylisothiazolinon (insbesondere 4,5-Dichlor-2-octyl-4-isothiazolin-3-on, DCOIT) umfassen.

In einer beispielhaften Ausführungsform enthält die Zusammensetzung maximal 80 Gew.-% Milchfett, insbesondere maximal 75 Gew.-% Milchfett, insbesondere maximal 70 Gew.-% Milchfett. Die Zusammensetzung kann insbesondere mindestens 30 Gew.-% Milchfett, insbesondere mindestens 40 Gew.-% Milchfett, insbesondere mindestens 50 Gew.-% Milchfett, insbesondere mindestens 60 Gew.-% Milchfett, umfassen. In einer beispielhaften Ausführungsform enthält die Zusammensetzung etwa 70 Gew.- % Milchfett.

Unter "Miichfett" im Sinne der vorliegenden Anmeldung wird im Allgemeinen eine Zusammensetzung verstanden, die Lipidbestandteile von Milch, z.B. von Kuhmilch, Schafsmilch, Ziegenmilch und dergleichen, enthält. In einer beispielhaften Ausführungsform ist das Milchfett eine Dispersion aus Milch und Fettsäuren oder eine Dispersion aus Milchfett einschließlich Fettsäuren in Wasser. Das Milchfett trägt maßgeblich zur Umweltverträglichkeit der Zusammensetzung bzw. der damit erhaltenen Beschichtung bei und sorgt außerdem für die Ausbildung einer weitgehend homogenen Beschichtung.

In einer beispielhaften Ausführungsform umfasst das organische Lösungsmittel einen Alkohol, wie insbesondere Ethanol. Ethanol kann nach Bedarf zugesetzt werden, um einen für den Verbraucher gewünschten Zustand der Materialstärke, zu erreichen. Ethanol hat sich ferner als besonders gut geeignet zum Lösen einiger der Komponenten der Zusammensetzung, wie insbesondere des Harzes und der optionalen Additive erwiesen. Außerdem kann mittels des organischen Lösungsmittels die Viskosität der Zusammensetzung so eingestellt werden, dass die Zusammensetzung gut handhabbar, insbesondere auftragbar, ist.

In einer beispielhaften Ausführungsform umfasst die Zusammensetzung 4 bis 15 Gew.-% Harz, 2 bis 8 Gew.-% Titandioxid, 2 bis 8 Gew.-% Zellstofffaser, 1 bis 4 Gew.-% Biozid, 40 bis 70 Gew.-% Milchfett, optional Enzym und/oder Additive und der Rest organisches Lösungsmittel.

In einer beispielhaften Ausführungsform umfasst die Zusammensetzung 8 Gew.-% Harz (insbesondere Birkenharz gelöst in Ethanol), 4 Gew.-% Titandioxid (gelöst in Schwefelsäure), 4 Gew.-% Zellstofffaser, 2 Gew.-% Biozid, 70 Gew.-% Milchfett (insbesondere eine Mischung aus Milch und Fettsäure), 8 Gew.-% Enzym und 4 Gew.-% Härter und Verlaufmittel.

In einer beispielhaften Ausführungsform ist die erfindungsgemäße Zusammensetzung im Wesentlichen in Wasser unlöslich und/oder im Wesentlichen frei von Schadstoffen, Giften, Silikaten und Silikonen.

Ein Herstellungsverfahren, d.h. ein Verfahren zur Herstellung einer Zusammensetzung zum Auftragen auf einer Oberfläche, insbesondere einer erfindungsgemäßen Zusammensetzung, umfasst folgende Schritte:
zumindest teilweises Lösen eines Harzes in einem organischen Lösungsmittel, insbesondere Ethanol,
zumindest teilweises Lösen von Titandioxid in einer Säure, insbesondere Schwefelsäure,
optional Lösen von mindestens einem Additiv, ausgewählt aus der Gruppe, bestehend aus Härter und Verlaufmittel, in einem organischen Lösungsmittel, insbesondere Ethanol,
Bereitstellen von Zellstofffaser, Biozid und Milchfett in Wasser,
Mischen der hergestellten und bereitgestellten Lösungen bzw. Suspensionen.

Mit dem erfindungsgemäßen Herstellungsverfahren lässt sich unmittelbar und in einfacher Weise eine erfindungsgemäße Zusammensetzung herstellen, die leicht verarbeitet werden kann.

In einer beispielhaften Ausführungsform liegt das eingesetzte Titandioxid in der Rutil-Morphologie vor mit einer durchschnittlichen Korngröße von vorzugsweise weniger als 0,25 mm. Es hat sich gezeigt, dass sich derartige Partikel in der Säure relativ gut anlösen, so dass selbst wenn keine klare Flüssigkeit erhalten wird, eine gut verarbeitbare Suspension erhalten wird, die in der Folge nach weiterer Verarbeitung zu einem klaren, homogenen Überzug führt. In einer beispielhaften Ausführungsform ist die Säure zum zumindest teilweisen Lösen Schwefelsäure oder Flusssäure, insbesondere Schwefelsäure. Dadurch lassen sich die Partikel aus Titandioxid besonders gut lösen bzw. zumindest anlösen. Das Lösen kann durch Erhitzen auf 100°C weiter verbessert werden.

In einer beispielhaften Ausführungsform wird das Milchfett in Wasser bei erhöhter Temperatur gelöst, zum Beispiel in 80°C heißem Wasser. Zur Vermeidung eines Verdampfens des organischen Lösungsmittels, kann es vorteilhaft sein, die wässrige Lösung vor dem Vermischen abkühlen zu lassen.

In einer beispielhaften Ausführungsform wird das Mischen der hergestellten und bereitgestellten Lösungen bzw. Suspensionen mittels eines Rührwerks durchgeführt bzw. umfasst das Mischen ein Rühren der hergestellten und bereitgestellten Lösungen bzw. Suspensionen, zum Beispiel über eine Zeitdauer von 2 bis 10 Stunden.

Nach dem Mischen ist es vorteilhaft, die Zusammenfassung unmittelbar zu verpacken, insbesondere luftdicht und/oder lichtdicht zu verpacken, zum Beispiel in Dosen oder einer Multipackung, um eine natürliche Trocknung zu verhindern.

Ein weiteres Ziel der Erfindung wird durch die Verwendung einer Zusammensetzung zur Herstellung einer Beschichtung auf einem Gegenstand durch Aufbringen der Zusammensetzung erreicht, wobei die vorstehenden dargelegten Vorteile volle Wirkung entfalten.

Ein Beschichtungsverfahren, d.h. ein Verfahren zur Beschichtung eines Gegenstands (zum Beispiel ein Boot oder ein Fahrzeug), umfasst einen Schritt des Auftragens einer erfindungsgemäßen Zusammensetzung auf einer Oberfläche (zum Beispiel aus Metall, Kunststoff, Gummi, Stoff oder Holz) des Gegenstands. Das Beschichtungsverfahren kann sowohl im Inneren von Gebäuden, wie zum Beispiel eine Lagerhalle, als auch im Freien durchgeführt werden

In einer beispielhaften Ausführungsform umfasst das Auftragen ein Aufsprühen, Streichen, Rollen, Rakeln und/oder Spritzen der Zusammensetzung auf der Oberfläche des Gegenstands.

Eine (harzhaltige) Beschichtung bzw. ein (harzhaltiger) Überzug wird aus einer erfindungsgemäßen Zusammensetzung gebildet bzw. ist nach einem erfindungsgemäßen Beschichtungsverfahren erhältlich.

Weitere Merkmale, Vorteile und Wirkungen der Erfindung ergeben sich aus dem nachfolgenden Ausführungsbeispiel, das aber lediglich der Verdeutlichung der erfindungsgemäßen Lehren dienen und in keiner Weise den Umfang der vorliegenden Erfindung beschränken soll.

Im Folgenden ist die Herstellung einer beispielhaften erfindungsgemäßen Zusammensetzung beschrieben. Die Prozentangaben beziehen sich dabei auf die Anteile der jeweiligen Komponente in der fertigen Zusammensetzung:

8 Gew. % von Harzen in flüssiger Form werden in Ethanol gelöst, bis sich eine rückstandsfreie, klare Flüssigkeit gebildet hat. Die Beimischung des separat bereitgestellten, in Schwefelsäure gelösten Titandioxids und die bereits vorgemischten übrigen Lösungen werden durch Aufwärmen vermischt.

Die komplette Mischung wird mindestens 5 Stunden zusammengerührt und geschüttelt, dabei abgekühlt, bis eine cremige Masse entstanden ist.

Die so erhaltene Masse wird anschließend in dunkle, dichte Behälter abgefüllt.

Die vorliegende Erfindung wurde an Hand spezifischer Ausführungsformen und einem Ausführungsbeispiel beschrieben. Die Erfindung ist aber nicht hierauf beschränkt und verschiedene Modifikationen hiervon sind möglich, ohne den Umfang der vorliegenden Erfindung zu verlassen.

## Patentansprüche

1. Zusammensetzung zum Auftragen auf einer Oberfläche zur Ausbildung einer Beschichtung, wobei die Zusammensetzung Folgendes umfasst:
• Harz,
• Titandioxid,
• Zellstofffaser,
• Biozid,
• Milchfett und
• organisches Lösungsmittel.

2. Zusammensetzung nach Anspruch 1, wobei die Zusammensetzung eine Lösung oder eine Suspension ist.

3. Zusammensetzung nach Anspruch 1 oder 2, wobei das Harz ausgewählt ist aus der Gruppe, bestehend Harz aus Ahorn, Harz aus Birke und Mischungen davon.

4. Zusammensetzung nach einem der vorherigen Ansprüche, wobei das Biozid ausgewählt ist aus der Gruppe, bestehend aus Isothiazolinonen, Oxazolidinen, Carbamate, quarternären Ammoniumverbindungen und Mischungen davon.

5. Zusammensetzung nach Anspruch 4, wobei das Biozid Dichloroctylisothiazolinon (4,5-Dichlor-2-octyl-4-isothiazolin-3-on, DCOIT) umfasst.

6. Zusammensetzung nach einem der vorherigen Ansprüche, wobei das Milchfett eine Dispersion aus Milch und Fettsäuren ist.

7. Zusammensetzung nach einem der vorherigen Ansprüche, wobei das organische Lösungsmittel einen Alkohol, insbesondere Ethanol, umfasst.

8. Zusammensetzung nach einem der vorherigen Ansprüche, ferner umfassend mindestens ein Enzym.

9. Zusammensetzung nach einem der vorherigen Ansprüche, ferner umfassend mindestens ein Additiv, ausgewählt aus der Gruppe, bestehend aus Härter und Verlaufmittel.

10. Zusammensetzung nach einem der vorherigen Ansprüche, wobei die Zusammensetzung Folgendes umfasst:
• 4 bis 15 Gew.-% Harz,
• 2 bis 8 Gew.-% Titandioxid,
• 2 bis 8 Gew.-% Zellstofffaser,
• 1 bis 4 Gew.-% Biozid,
• 40 bis 70 Gew.-% Milchfett,
• optional Enzym und/oder Additive und
• organisches Lösungsmittel.

11. Verfahren zur Herstellung einer Zusammensetzung zum Auftragen auf einer Oberfläche, insbesondere einer Zusammensetzung gemäß einem der Ansprüche 1 bis 10, umfassend folgende Schritte:
zumindest teilweises Lösen eines Harzes in einem organischen Lösungsmittel, insbesondere Ethanol,
zumindest teilweises Lösen von Titandioxid in einer Säure, insbesondere Schwefelsäure,
optional Lösen von mindestens einem Additiv, ausgewählt aus der Gruppe, bestehend aus Härter und Verlaufmittel, in einem organischen Lösungsmittel, insbesondere Ethanol,
Bereitstellen von Zellstofffaser, Biozid und Milchfett in Wasser,
Mischen der hergestellten und bereitgestellten Lösungen bzw. Suspensionen.

12. Verwendung einer Zusammensetzung gemäß einem der Ansprüche 1 bis 10 zur Herstellung einer Beschichtung, insbesondere einer Antifouling-Beschichtung, auf einem Gegenstand durch Aufbringen der Zusammensetzung.

13. Verfahren zur Beschichtung eines Gegenstands, umfassend einen Schritt des Auftragens einer Zusammensetzung gemäß einem der Ansprüche 1 bis 10 auf einer Oberfläche des Gegenstands.

14. Verfahren nach Anspruch 13, wobei das Auftragen ein Aufsprühen, Streichen, Rollen, Rakeln und/oder Spritzen der Zusammensetzung auf der Oberfläche des Gegenstands umfasst.

15. Beschichtung, gebildet aus einer Zusammensetzung gemäß einem der Ansprüche 1 bis 10 bzw. erhältlich nach einem Verfahren gemäß Anspruch 13 oder 14.
